# EUROPÄISCHE PATENTANMELDUNG

(11) **EP 1 772 223 A1**
(43) Veröffentlichungstag der Anmeldung: **11.04.2007**
(21) Anmeldenummer: 05109330.0
(22) Anmeldetag: 07.10.2005
(51) Int. Cl.: B23K 20/10, H01R 43/02

(54) **Vorrichtung zum Ultraschallverbinden von elektrischen Leitern mit einer sich über die Arbeitsfläche der Sonotrode hinaus erstreckenden Führung**

(71) Anmelder: Telsonic Holding AG, 9552 Bronschhofen (CH)
(72) Erfinder: Kammerer, Michael, 9535 Wilen bei Wil (CH); Müller, Ralf, 9404 Rorschacherberg (CH)
(74) Vertreter: Hepp, Dieter

(57) **Zusammenfassung**

Eine Vorrichtung (1) zum Ultraschallschweissen von Gegenständen wie elektrischen Leitern weist einen Verdichtungsraum auf. Der Verdichtungsraum ist durch die Arbeitsfläche (11) einer Sonotrode (12), die seitliche Begrenzungsfläche (13) eines Seitenschiebers (14) sowie durch eine obere und eine seitliche Ambossfläche (15,17) eines Ambossteils (18) begrenzt. Das Ambossteil (18) ist mit einer Führung (19) in einer Richtung (R) quer zur Arbeitsfläche (11) verschiebbar. Die Führung (19) erstreckt sich in Richtung (R) quer zur Arbeitsfläche (11) über die Arbeitsfläche (11) hinaus.

## Beschreibung

Die Erfindung betrifft eine Vorrichtung zum Ultraschallverbinden von Gegenständen mit den Merkmalen des Oberbegriffs von Anspruch 1.

Vorrichtungen zum Ultraschallschweissen von Gegenständen wie beispielsweise elektrischen Leitern, insbesondere Litzen sind bekannt. Eine solche Vorrichtung ist beispielsweise in EP 1 516 689 A1 gezeigt. Die Vorrichtung weist einen Verdichtungsraum zum Aufnehmen der Litzen auf. Dieser Verdichtungsraum wird durch eine Arbeitsfläche einer Sonotrode, eine seitliche Begrenzungsfläche eines Seitenschiebers sowie durch eine obere und eine seitliche Ambossfläche eines Ambossteils begrenzt. Durch Reduktion der Dimension des Verdichtungsraums durch gegenseitiges Verschieben der einzelnen Flächen werden die Litzen kompaktiert. Durch Applikation von Ultraschall durch die Sonotrode werden die Litzen miteinander verschweisst.

Ein Problem bei solchen herkömmlichen Schweissvorrichtung ist deren Grösse. Damit solche Vorrichtungen flexibel eingesetzt werden können, sollten sie möglichst leicht und handlich gebaut werden. Die beim Schweissvorgang auftretenden Kräfte zum Komprimieren des Verdichtungsraums erfordern aber die Verwendung von relativ grossen und schweren Antrieben. Dazu sind deshalb auch relativ grosse und leistungsstarke Generatoren notwendig. Ein weiteres Problem bei bekannten Vorrichtung liegt darin, dass die einzelnen Flächen mit sehr geringen Toleranzen zusammen spielen müssen. Beispielsweise muss, ein Spalt zwischen der Sonotrode und dem verschiebbaren, seitlichen Amboss vorgesehen werden. Ein Spalt muss vorhanden sein, damit eine ungehinderte Auf- und Abbewegung des Ambosses möglich ist. Der Spalt darf aber nicht zu gross sein, damit das Hineinfallen von Litzen verhindert wird.

Der Spalt muss aber auch eine bestimmte minimale Spaltbreite aufweisen, damit ein Kontakt zwischen Amboss und Sonotrode bei Materialausdehnung oder Verformung verhindert wird. Bei Kontakt und gleichzeitiger Ultraschallbeaufschlagung könnte eine unerwünschte Verbindung zwischen Sonotrode und Amboss entstehen. Aufgrund von diesen Toleranzen ist die Fertigung von bekannten Vorrichtungen teuer und aufwendig.

Es ist daher eine Aufgabe der vorliegenden Erfindung, die Nachteile des Bekannten zu vermeiden, insbesondere also eine Vorrichtung zum Ultraschallverbinden von Gegenständen zu schaffen, welche sich platzsparend und kostengünstig herstellen lässt. Insbesondere sollen mit im Verhältnis zu bekannten Vorrichtungen kleinen Schweissvorrichtungen und Generatoren vergleichbare Schweissresultate erzielt werden, wie mit bekannten Vorrichtungen.

Erfindungsgemäss wird diese Aufgabe mit einer Vorrichtung mit den Merkmalen des kennzeichnenden Teils der unabhängigen Patentansprüche gelöst.

Die erfindungsgemässe Vorrichtung weist einen Verdichtungsraum zur Aufnahme der zu verbindenden Gegenstände, typischerweise von Litzen auf. Der Verdichtungsraum ist in an sich bekannter Weise durch eine Arbeitsfläche einer Sonotrode, eine seitliche Begrenzungsfläche eines Seitenschiebers und einer oberen und einer seitlichen Ambossfläche eines Ambossteils begrenzt. Das Ambossteil ist mittels einer Führung in einer Richtung quer zur Arbeitsfläche der Sonotrode verschiebbar. Der Seitenschieber gibt die Knotenbreite vor. Der Amboss schliesst den Verdichtungsraum. Die obere Ambossfläche ist zur Anpassung an die Knotenbreite parallel zur Arbeitsfläche verschiebbar. Typischerweise erfolgt die Verschiebung des Ambossteils möglichst senkrecht zur Arbeitsfläche. Erfindungsgemäss erstreckt sich die Führung für das Ambossteil in Richtung quer zur Arbeitsfläche der Sonotrode über die Arbeitsfläche hinaus. Mit dieser Konstruktion werden verschiedene Vorteile erzielt. Es hat sich herausgestellt, dass die Qualität der Schweissung mit einer solchen zusätzlichen Führung bei gleichzeitig reduzierter Schweizssleistung deutlich verbessert werden kann. Die verlängerte Führung führt zwar zu einer etwas schwereren Konstruktion der Begrenzung für den Verdichtungsraum. Gleichzeitig reduziert diese Art von Führung Verformungen des Verdichtungsraums während dem Schweissvorgang und erhöht so die Qualität der Schweissung. Aufgrund der verbesserten Qualität kann die Schweissleistung reduziert werden. Dadurch können Generatoren mit tiefen Leistungen verwendet werden. Die Vorrichtung wird dadurch insgesamt kompakter und leichter.

Das Ambossteil ist bevorzugt an einem Halteteil befestigt, welches seinerseits in der Führung verschiebbar ist. Es ist aber auch denkbar zumindest das seitliche Ambossteil direkt in der Führung verschiebbar anzuordnen.

Die Führung erstreckt sich bevorzugt wenigstens um die maximale Schweisshöhe über die Arbeitsfläche hinaus. Als maximale Schweisshöhe wird die maximale Höhe des Verdichtungsraums verstanden, mit welcher noch Schweissungen mit der erfindungsgemässen Vorrichtung durchgeführt werden. Auf diese Weise wird im Ganzen für die Schweissung wesentlichen Bereich eine besonders steife Ausbildung des Verdichtungsraums erzielt.

Bevorzugt erstreckt sich die Führung ausserdem derart weit von der Arbeitsfläche weg, dass das Ambossteil auch in vollständig geöffneter Position seitlich über seine ganze Höhe durch die Führung abgestützt ist.

Die Führung ist dabei vorzugsweise als U ausgebildet. Die Schenkel der U-förmigen Führung sind dabei vorzugsweise an ihrem Ende miteinander verbunden. Dadurch wird eine Aufnahme für das untere Ambossteil gebildet. Die Verbindung der Schenkel führt zu einer weiteren Versteifung der Führung.

Das Ambossteil ist mittels eines Antriebs quer zur Arbeitsfläche verschiebbar. Der Antrieb greift in einem Angriffspunkt an einer unteren Fläche des seitlichen Ambossteils an. Bevorzugt ist der Angriffspunkt näher bei der Arbeitsfläche angeordnet als die Führungsflächen der Führung. Auf diese Art und Weise werden Hebelkräfte und Momente reduziert. Bei Beaufschlagung des seitlichen Ambossteils mit einer Verschiebekraft sind daher die Verformungen geringer. Auch dies führt zu genauer definierten Schweissstellen bei vorbestimmter Schweissleistung.

Der Seitenschieber ist mit einem Antrieb in einer Richtung parallel zur Arbeitsfläche verschiebbar. In diesem Zusammenhang ist es vorteilhaft, dass der Antrieb in einem Angriffspunkt am Seitenschieber so angreift, dass die Verlängerung des Angriffpunktes parallel zur Arbeitsfläche gesehen durch die seitliche Begrenzungsfläche verläuft. Auf diese Art und Weise wird auch beim Seitenschieber durch Reduktion von Hebelkräften und Momenten eine Verformung des Verdichtungsraums während dem Schweissvorgang bestmöglich beschränkt.

Zwischen der Sonotrode und dem seitlichen Ambossteil besteht ein Spalt, der vom verwendeten Material bzw. dessen Temperaturausdehnung abhängt. Typischerweise kann der Spalt von wenigstens 0,03 mm, bevorzugt 0,05 mm betragen. Es hat sich gezeigt, dass aufgrund der durch die Führung bewegten Festigkeit des Verdichtungsraums ein verhältnismässig grosser Spalt gewählt werden kann. Bei bekannten Vorrichtung muss der Spalt klein, typischerweise im Bereich von 0,02 mm gewählt werden, weil aufgrund von Verformungen des seitlichen Ambossteils während dem Schweissvorgang sich der Spalt aufweitet. Wenn der Spalt zu gross gewählt würde, könnten Litzen in dem Spalt eingeklemmt werden. Mit der erfindungsgemässen Konstruktion ist es daher auf einfache Art und Weise möglich, einen grösseren Spalt vorzusehen, was die Prozesssicherheit vergrössert, weil ein unerwünschter Kontakt zwischen den Werkzeugteilen zuverlässig vermieden wid. Eine Kompensation von Verformungen ist nicht erforderlich.

Die Erfindung wird im Folgenden in Ausführungsbeispielen und anhand der Zeichnungen näher erläutert. Es zeigen:
- Figur 1: eine perspektivische Darstellung einer erfindungsgemässen Vorrichtung in Explosionsdarstellung, und
- Figur 2: eine Draufsicht auf den Verdichtungsraum einer erfindungsgemässen Vorrichtung.

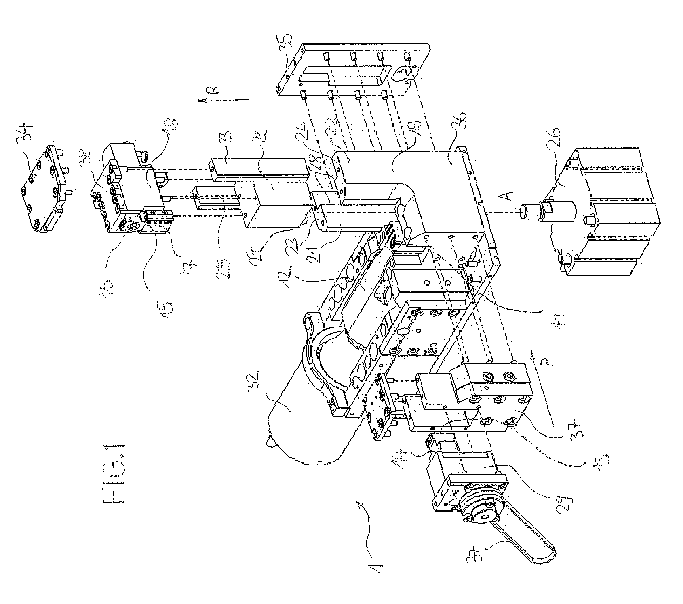

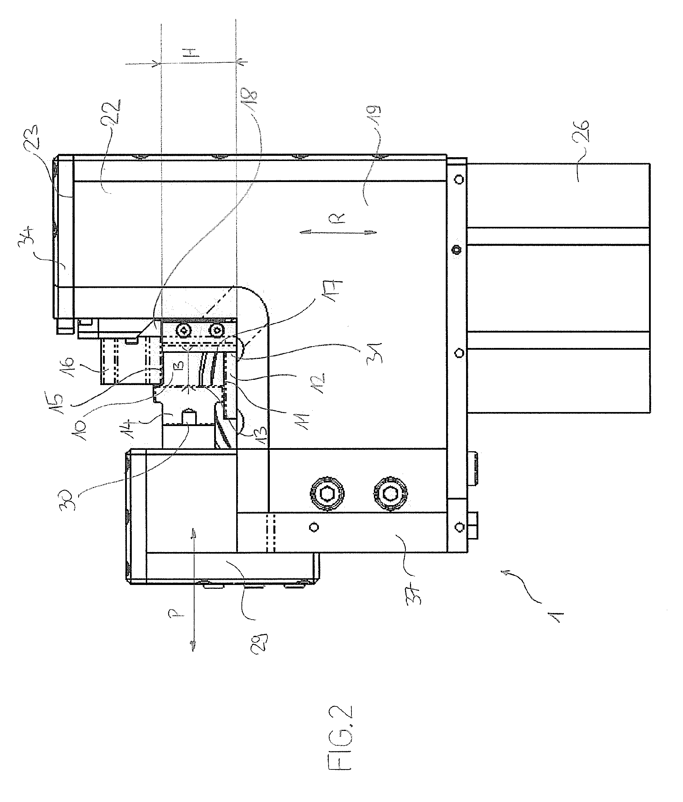

Figur 1 zeigt eine erfindungsgemässe Vorrichtung 1 zum Ultraschallverbinden von Gegenständen. Typischerweise sind solche Gegenstände miteinander zu verschweissende Enden von Litzen. Die Vorrichtung 1 weist eine Sonotrode 12 mit einer Sonotrodenspitze mit einer Arbeitsfläche 11 auf. Die Sonotrode ist mit einem Konverter 32 in bekannter Art und Weise in Ultaschallschwingungen versetzbar. Es können optional zwischen Konverter und Sonotrode auch Booster in an sich bekannter Art und Weise eingesetzt werden. Die verwendete Sonotrode und Sonotrodenspitze entspricht dabei im Wesentlichen dem Aufbau wie in EP 1 516 689 gezeigt. Ein Verdichtungsraum (siehe auch Figur 2) ist seitlich durch eine seitliche Begrenzungsfläche 13 eines Seitenschiebers 14 begrenzt. Auf der anderen Seite ist der Verdichtungsraum durch eine seitliche Begrenzungsfläche 17 eines Ambossteils 18 begrenzt.

Nach oben hin, d.h. gegenüberliegend der Arbeitsfläche 11, ist der Verdichtungsraum durch eine obere Begrenzungsfläche 15 eines oberen Ambossteils 16 begrenzt. Die seitliche Begrenzungsfläche 17 und das obere Ambossteil 16 bilden gemeinsamen das Ambossteil 18, welches in einer Richtung R senkrecht zur Arbeitsfläche 11 verschiebbar ist. Dazu ist das Ambossteil 18 in einem Halteteil 20 befestigt, welches in einer Führung 19 verschiebbar gelagert ist. Im Halteteil 20 ist eine Aufnahme 25 für das Ambossteil gebildet. Das obere Ambossteil 16 ist dabei in einer Richtung P parallel zur Arbeitsfläche 11 in einer Führung des Ambossteil 18 gehalten.

Die seitliche Begrenzungsfläche 17 des Ambossteils 18 ist als Platte ausgebildet, welche am Ambossteil 18 befestigt ist. Das obere Ambossteil 16 ist als im Ambossteil 18 verschiebbarer Balken ausgebildet.

Die Führung 19 ist als U mit zwei Schenkeln 21, 22 ausgebildet. Die Schenkel 21, 22 sind mit Führungsflächen 28 versehen. Schienen 33 des Halteteils 20 laufen entlang der Führungen 28. An ihren oberen Enden 23, 24 sind die Schenkel 21, 22 mittels einer Verbindungsplatte 34 miteinander verbunden. Auf diese Weise wird die Stabilität zusätzlich erhöht. Die Führung 19 ist ausserdem seitlich mit einer Abschlussplatte 35 geschlossen.

Das Ambossteil 18 ist in der Aufnahme 25 mittels Schrauben befestigt. Durch leichtes Anlösen der Schrauben kann das Ambossteil 18 innerhalb der Aufnahme 25 leicht verschoben werden, sodass sich dieses genau positionieren lässt. Insbesondere lässt sich auf die Weise ein sehr genau definierter Spalt 31 (siehe Figur 2) zwischen der Sonotrode 12 und der seitlichen Begrenzungsfläche 17 einstellen.

Die Führungsschienen 33 am Halteteil 20 erstrecken sich über das Halteteil 20 hinaus, sodass das Ambossteil 18 seitlich von den Führungsschienen 33 eingefasst wird. Eine Verbindungsplatte 38 am Ambossteil 18 schliesst eine nicht näher bezeichnete Aufnahme für das obere Ambossteil 16 ab. Die Verbindungsplatte 38 ist mit den Schienen 33 einerseits und mit dem Ambossteil 18 andererseits verschraubt. Das Ambossteil 18 ist dadurch fest mit den Führungsschienen 33 verbunden.

Das Ambossteil 18 wird in Richtung R durch einen Pneumatikantrieb 26 bewegt. Der Pneumatikantrieb 26 ist in einem Angriffspunkt 27 in einer Bewegungsachse A des Antriebs 26 mit dem Halteteil 20 verbunden. Der Angriffspunkt 27 liegt dabei näher beim Verdichtungsraum (siehe auch Figur 2) als die Führungsfläche 28.

An der Basis eines die Führung 19 aufweisenden Basisteils 36 ist ausserdem ein Halteteil 37 befestigt, welches zur Aufnahme eines Antriebs und einer Führung für den Seitenschieber 14 dient. Der Seitenschieber 14 wird mit einem Spindelantrieb 29 in Richtung P parallel zur Arbeitsfläche 11 verschoben. Über einen Riemen 37 wird der Spindelantrieb 29 mit einem nicht gezeigten Elektromotor betätigt.

In Figur 2 ist eine Draufsicht auf den teilweise geschlossenen Verdichtungsraum 10 gezeigt. Gleiche Bezugszeichen wie in Figur 1 bezeichnen gleiche Teile. In Figur 2 ist das Ambossteil 18 in der maximal ausgefahrenen Position gezeigt. Diese Position entspricht einer Maximalhöhe H des Verdichtungsraums 10. Die Führung 19 ist mit den Schenkeln 21, 22 des U so ausgebildet, dass das Ambossteil 18 bzw. das Halteteil 20 (siehe Figur 1) auch in dieser Position über seine ganze Höhe geführt ist. Die Maximale Schweisshöhe, d.h. die maximale Höhe eines verschweissten Pakets von Litzen nach der Verschweissung ist dabei kleiner als die Höhe H. Bei herkömmlichen Anwendungen beträgt die maximale Schweisshöhe typischerweise 5 mm.

Zwischen der Sonotrode 12 und der seitlichen Begrenzungsfläche 17 ist ein Spalt 31 gebildet, welcher ein Verschieben der Begrenzungsfläche 17 in Richtung R erlaubt. Der Spalt ist in Figur 2 nicht dargestellt und beträgt typischerweise 0,05 mm.

Der Seitenschieber 14 ist in Richtung P parallel zur Arbeitsfläche 11 verschiebbar, sodass die Breite B des Verdichtungsraums 10 eingestellt werden kann. Vor dem Schliessen des Ambossteils wird die Knotenbreite mit dem Seitenschieber festgelegt. Dazu greift der Antrieb 29 des Seitenschiebers (siehe Figur 1) in einem Angriffspunkt 30 an, dessen Verlängerung parallel zur Arbeitsfläche 11 durch die seitliche Begrenzungsfläche 13 führt.

Zum Einlegen von Litzen in den Verdichtungsraum wird das obere Ambossteil 16 zurückgezogen, sodass der Verdichtungsraum 10 nach oben offen ist. Wenn die Litzen eingelegt sind, wird das obere Ambossteil 16 an der seitlichen Begrenzungsfläche 13 des Seitenschiebers 14 in Anschlag gebracht. Durch Betätigen des Pneumatikzylinders 26 wird anschliessend der Verdichtungsraum 10 durch Bewegen des Ambossteils 18 in Richtung R verringert. Dadurch werden im Verdichtungsraum 10 aufgenommene Litzen verdichtet. Wenn der gewünschte Verdichtungsgrad erreicht ist, wird die Sonotrode 12 mit Ultraschall beaufschlagt. Dadurch werden die Litzen miteinander verschweisst. Der Ablauf der Schweissung ist nicht Gegenstand der vorliegend Erfindung. Typischerweise erfolgt der Ablauf wie in EP 1 516 689 gezeigt.

Aufgrund der Führung 19, welche sich über die Arbeitsfläche 11 hinaus und über die ganze Länge des Halteteils 20 und des Ambossteils 18 erstreckt, lassen sich auch mit relativ geringen Schweissleistungen von typischerweise 3kW sehr gute Schweissergebnisse erzielen. Dank dieser Führung 19 sind die Verformungen aufgrund der beim Verdichtungsvorgang auftretenden Kräfte gering. Gleichzeitig werden auf das Ambossteil 18 wirkende Momente reduziert, weil der Angriffspunkt 27 (siehe Figur 1) des Antriebs 26 am Halteteil 20 näher bei der seitlichen Begrenzungsfläche 17 liegt, als die Führungsfläche 28 der Führung 19.

Ebenso werden Momente im Bereich des Seitenschiebers reduziert, weil der Angriffspunkt 30 für den Antrieb des Seitenschiebers 14 in der Verlängerung der seitlichen Begrenzungsfläche 13 bzw. des Verdichtungsraums 10 liegt.

## Patentansprüche

1. Vorrichtung (1) zum Ultraschallverbinden von Gegenständen wie elektrischen Leitern, insbesondere Litzen,
mit einem Verdichtungsraum (10) zur Aufnahme der Gegenstände, wobei der Verdichtungsraum (10) durch
eine Arbeitsfläche (11) einer Sonotrode (12),
eine seitliche Begrenzungsfläche (13) eines Seitenschiebers (14),
eine obere und eine seitliche Ambossfläche (15, 17) eines Ambossteils (18) begrenzt wird,
wobei das Ambossteil (18) mittels einer Führung (19) in einer Richtung (R) quer zur Arbeitsfläche (11) verschiebbar ist,
**dadurch gekennzeichnet, dass** sich die Führung (19) in Richtung (R) quer zur Arbeitsfläche (11) über die Arbeitsfläche (11) hinaus erstreckt.

2. Vorrichtung nach Anspruch 1, **dadurch gekennzeichnet, dass** das Ambossteil (18) an einem Halteteil (20) befestigt ist, das in der Führung (19) verschiebbar gehalten ist.

3. Vorrichtung nach einem der Ansprüche 1 oder 2, **dadurch gekennzeichnet, dass** der Verdichtungsraum (10) zum Schweissen von Gegenständen bis zu einer maximalen Schweisshöhe ausgebildet ist und dass die Führung (19) sich wenigstens über die maximale Schweisshöhe erstreckt.

4. Vorrichtung nach einem der Ansprüche 1 bis 3, **dadurch gekennzeichnet, dass** die Führung (19) sich derart über die Arbeitsfläche (11) erstreckt, dass das Ambossteil (18) auch in maximal geöffneter Position (H) über seine ganze Höhe in der Führung (19) geführt ist.

5. Vorrichtung nach einem der Ansprüche 1 bis 4, **dadurch gekennzeichnet, dass** die Führung (19) als U ausgebildet ist und dass die Schenkel (21, 22) des U an ihren Enden (23, 24) miteinander verbunden sind, sodass sich eine Aufnahme (25) für das Ambossteil (18) bildet.

6. Vorrichtung nach einem der Ansprüche 1 bis 5, **dadurch gekennzeichnet, dass** das Ambossteil (18) in einer Richtung (R) quer zur Arbeitsfläche (11) mittels eines Antriebs (26) verschiebbar ist, welcher in einem Angriffspunkt (27) am Ambossteil (18) oder an einem Halteteil (20) für das Ambossteil (18) angreift,
wobei der Angriffspunkt (27) näher bei der Arbeitsfläche (11) liegt als Führungsflächen (28) der Führung (19).

7. Vorrichtung nach einem der Ansprüche 1 bis 6, **dadurch gekennzeichnet, dass** der Seitenschieber (14) mittels eines Antriebs (29) in einer Richtung (P) parallel zur Arbeitsfläche (11) verschiebbar ist, wobei der Antrieb (29) in einem Angriffspunkt (30) am Seitenschieber (14) angreift und
wobei die Verlängerung in Bewegungsrichtung des Angriffspunktes (30) parallel zur Arbeitsfläche (11) gesehen durch die seitliche Begrenzungsfläche (13) verläuft.

8. Vorrichtung nach einem der Ansprüche 1 bis 7, **dadurch gekennzeichnet, dass** zwischen der Sonotrode (12) und der seitlichen Begrenzungsfläche (17) ein Spalt (31) von mehr als 0,03 mm, bevorzugt von etwa 0,05 mm gebildet ist.
